# EUROPÄISCHE PATENTSCHRIFT

(11) **EP 1 064 415 B1**
(45) Veröffentlichungstag und Bekanntmachung des Hinweises auf die Patenterteilung: **05.06.2002**
(21) Anmeldenummer: 99910237.9
(22) Anmeldetag: 18.02.1999
(51) Int. Cl.: C23C 14/20, C23C 14/58, C08J 7/04, C25D 11/00

(54) **KUNSTSTOFFBAUTEIL**
PLASTIC COMPONENT
COMPOSANT EN MATIERE PLASTIQUE

(30) Priorität: 18.03.1998 DE 19811655
(43) Veröffentlichungstag der Anmeldung: 03.01.2001
(73) Patentinhaber: LuK Lamellen und Kupplungsbau Beteiligungs KG, 77813 Bühl (DE)
(72) Erfinder: VENZ, Rainer, D-91085 Weisendorf (DE)
(86) Internationale Anmeldenummer: EP9901067
(87) Internationale Veröffentlichungsnummer: WO9947725

(56) Entgegenhaltungen:
- DATABASE WPI Section Ch, Week 7824 Derwent Publications Ltd., London, GB; Class A35, AN 78-42862A XP002105960 & JP 53 049070 A (KATSUSHIKA PRESS KOGY) , 4. Mai 1978
- DATABASE WPI Section Ch, Week 7809 Derwent Publications Ltd., London, GB; Class M11, AN 78-16512A XP002106494 & JP 53 004737 A (NIPPON KINZOKU CO LTD) , 17. Januar 1978
- PATENT ABSTRACTS OF JAPAN vol. 010, no. 012 (P-421), 17. Januar 1986 & JP 60 168121 A (NIPPON DENKI KK), 31. August 1985
- PATENT ABSTRACTS OF JAPAN vol. 014, no. 544 (C-0784), 4. Dezember 1990 & JP 02 233575 A (EAGLE IND CO LTD), 17. September 1990
- PATENT ABSTRACTS OF JAPAN vol. 095, no. 005, 30. Juni 1995 & JP 07 035257 A (RIKEN CORP), 7. Februar 1995 -& DATABASE WPI Section Ch, Week 95157. Februar 1995 Derwent Publications Ltd., London, GB; Class M13, AN 95111221 XP002106547 " Solenoid valve for automobile hydraulic system - composed of aluminium alloy with oxide film on inside surface of sliding hole. " & JP 07 035257 A (RIKEN CORP) , 7. Februar 1995

## Beschreibung

### Anwendungsgebiet der Erfindung

Die Erfindung betrifft ein Bauteil aus einem Kunststoff, dessen Oberfläche zumindest teilweise mit einer metallischen Schicht aus Aluminium oder einer Aluminiumlegierung versehen ist.

### Hintergrund der Erfindung

Derartig metallisierte Bauteile aus Kunststoff sind aus dem Fachbuch "Kunststoff-Metallisierung", Eugen G. Leuze Verlag, Saulgau/Württ, 1991, bereits bekannt. Auf Seite 75 dieser Vorveröffentlichung ist ein Computergehäuse aus Kunststoff beschrieben, das mit einer Aluminiumschicht versehen ist, um die vom Computer ausgehende Störstrahlung zu begrenzen. Ein weiteres Anwendungsbeispiel ist die Aluminiumbeschichtung von Polyester- oder Polycarbonatfolien, wie sie Seite 83 dieser Vorveröffentlichung entnommen werden kann. Bei diesen beiden Anwendungsbeispielen wird die Undurchlässigkeit von metallischem Aluminium für elektromagnetische Strahlen und für Flüssigkeiten ausgenutzt.
Weiterhin können Aluminiumschichten auf unterschiedliche Substrate aufgebracht und elektrochemisch oder chemisch, beispielsweise mittels einer Behandlung mit Schwefelsäure, mit einer Oxidschicht versehen werden. Hierzu offenbart die JP 2-233575 A eine anodisch oxidierte Aluminiumschicht auf einem porösen Keramiksubstrat, die JP 53-049070 A eine alumitisch erzeugte Aluminiumoxidschicht auf einem Kunststoffteil, die JP 60-168121 A eine in einer schwefelsauren Lösung anodisch oxidierte Aluminiumschicht auf einem Glassubstrat. Weiterhin sind Farbgebungsverfahren und Oberflächenvergütungsverfahren der Aluminiumoxidschichten beziehungsweise Oxidschichten von Aluminiumlegierungen beispielsweise aus der JP 53-004737 A bekannt.

### Zusammenfassung der Erfindung

Der Erfindung liegt die Aufgabe zugrunde, die an sich bekannten vorteilhaften Eigenschaften von Aluminium bzw. von dessen Verbindungen wie beispielsweise Aluminiumoxiden im Zusammenhang mit Kunststoffbauteilen im hydraulischen Bereich zu erweitern.

Erfindungsgemäß wird diese Aufgabe nach dem kennzeichnenden Teil von Anspruch 1 dadurch gelöst, daß die Oberfläche eines Bauteils für den hydraulischen Bereich mit einer Schicht aus Aluminium oder einer Aluminiumlegierung versehen wird und diese zur Erzeugung einer Oxidschicht einer chemischen oder elektrochemischen Behandlung unterworfen ist.

Das Bauteil soll als Dichtungsgleitfläche für schleifende Dichtungen im Hydraulikbereich, insbesondere bei zentralhydraulischen Kupplungsausrücksystemen für Kraftfahrzeuge verwendet werden. In diesem Fall wirkt sich insbesondere die erhöhte Verschleißfestigkeit und Korrosionsbeständigkeit der Al₂O₃-Schicht positiv auf das hydraulische Ausrücksystem aus, so daß dieses durch eine wirksame Dichtung störungsfrei und mit einer hohen Standzeit arbeiten kann.

Die an sich bekannten vorteilhaften charakteristischen Eigenschaften der Al₂O₃-Schicht wie:
- feste Verbindung mit der Aluminiumschicht, da die Al₂O₃-Schicht aus dieser entstanden ist,
- hervorragende Korrosionsbeständigkeit gegenüber der Witterung und chemischen Angriffen bei PH-Werten von 5 bis 8,
- dekorative Wirkung durch metallisches Aussehen,
- mechanische Beanspruchbarkeit durch Härte und Abriebfestigkeit,
- Isolierwirkung gegenüber dem elektrischen Strom,
- toxische Unbedenklichkeit
werden nun im Zusammenhang mit Kunststoffen im hydraulischen Bereich in vorteilhafter Weise kombiniert.

Der Begriff Kunststoffe ist im Sinne der Erfindung umfassend auszulegen, d. h. darunter sind makromolekulare, ganz oder teilweise durch Synthese entstandene und in wesentliche organische Materialien zu verstehen.

Die Erzeugung der gewünschten Oxidschicht zur Verstärkung des natürlichen Oxidfilms auf dem beschichteten Kunststoffbauteil erfolgt in bekannter Weise entweder durch chemische oder durch elektrochemische Behandlung. Das chemische Oxidieren, d.h. durch eine Tauch- oder Spritzbehandlung von Aluminium, in den verschiedensten alkalischen oder sauren oxidationsmittelhaltigen Lösungen, lassen sich die unterschiedlichsten Schichten herstellen. Von wesentlich größerer Bedeutung sind die elektrochemischen Verfahren zur Erzeugung der Aluminiumoxidschicht. Die mit Aluminium beschichteten Kunststoffbauteile werden dabei als Anode geschaltet und zusammen mit einer Gegenelektrode in einem Elektrolyten unter Gleichspannung gesetzt, wobei der anodisch sich abscheidende Sauerstoff bereits im Stadium des Entstehens eine Verbindung mit der Aluminiumoberfläche eingeht. Darüber hinaus entstehen Oxidschichten auf gereinigten Aluminiumoberflächen durch Behandeln in kochendem Wasser oder Dampf. Die Schichtdicke des Böhmits, d. h. des kristallinen, farblosen, wasserhaltigen Aluminiumoxids (AIOOH) ist dabei jedoch relativ gering.

Nach Anspruch 2 ist vorgesehen, daß die Oxidschicht eine Stärke von 5 bis 100 µm aufweisen soll. Aufbau und Dicke der Schicht hängen im wesentlichen von der Zeit und von der entsprechenden Strombelastung ab. Durch den großen Streuungsbereich der Schichtdicke ist ein großer Anwendungsbereich des mit Aluminium metallisierten Kunststoffbauteiles entsprechend den vorhandenen technischen Gegebenheiten möglich.

In Weiterbildung der Erfindung nach Anspruch 3 ist vorgesehen, daß die Al₂O₃-Schicht des Kunststoffbauteiles gefärbt sein soll. Dies erfolgt in bekannter Weise derart, daß frisch erzeugte Oxidschichten in wässrigen Lösungen organischer Farbstoffe oder anorganischer Salze eingetaucht werden. Das Färben mit organischen Farbstoffen kommt dabei am häufigstens zur Anwendung. Dabei werden Farbstoffe wie Alizarin- und Indigofarbstoffe, Metallkomplexe und viele andere benutzt. Für gute Färbungen soll die Mindestschichtdicke der Oxidschicht 20 µm betragen. Das Färben mit anorganischen Farbstoffen läuft gewöhnlich in zwei Stufen ab. Zunächst wird ein Teil des Farbstoffes in die Poren eingelagert. Dann werden die Substanzen mit weiteren Chemikalien umgesetzt oder mit Wasser hydrolisiert. Bei stattfindenden Reaktionen bilden sich in den Poren Färbungen wie gelb, bronze, gold und braun. Als Färbemittel werden beispielsweise Eisen(III)-Ammoniumoxalat und Kobaltazetat mit Kaliumpermanganat eingesetzt.

Nach einem weiteren zusätzlichen Merkmal der Erfindung nach Anspruch 4 soll die Oxidschicht verdichtet sein. Das Verdichten stellt in bekannter Weise eine wichtige und abschließende Behandlung beim anodischen Oxidieren dar. Nur ein ausreichendes Verdichten gewährleistet einen vollwertigen Schutz der Oberfläche. Bei der Verdichtung erreicht man an der anodischen Oxidschicht durch Kristallwasseraufnahme ein Schließen der Poren. Die Schichten werden somit besonders korrosions- und griffest.

Die Erfindung wird an nachstehendem Ausführungsbeispiel näher erläutert.

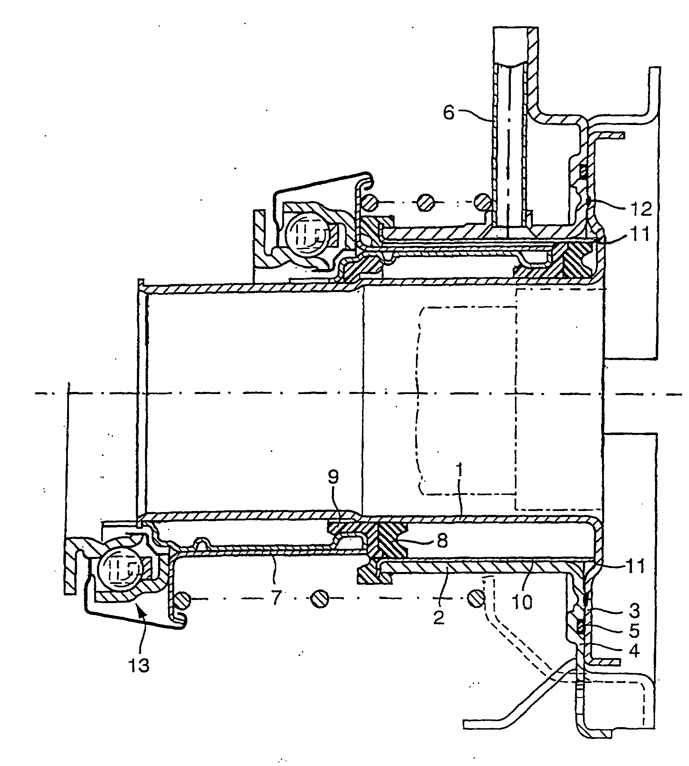

### Kurze Beschreibung der Zeichnung

Die einzige Figur zeigt einen Längsschnitt durch ein hydraulisches Ausrücksystem.

### Ausführliche Beschreibung der Zeichnung

Das in der Figur dargestellte hydraulisch betätigbare Ausrücksystem für eine Reibungskupplung besteht im wesentlichen aus den beiden rohrförmigen Blechteilen 1 und 2, die einen Zylinder bilden. Die Blechteile 1, 2 weisen jeweils einen radial nach außen verlaufenden Flansch 3 bzw. 4 auf, wobei diese Flansche über eine Schweißverbindung 12 miteinander verbunden sind. Zwischen den Flanschen 3 und 4 ist eine Dichtung 5 angeordnet. Der aus den rohrförmigen Blechteilen 1 und 2 hergestellte Zylinder wird durch einen als Blechteil 7 ausgebildeten Kolben beaufschlagt. An der Stirnseite des Blechteiles 7 ist eine Dichtung 8 in Form eines Nutringes vorhanden, wobei ein Abstreifring 9 zwischen der Stirnseite des Blechteiles 7 und der Dichtung 8 angeordnet ist. Das Blechteil 7 dient gleichzeitig als Träger für ein Lager 13. Das radial nach außen angeordnete rohrförmige Blechteil 2 ist mit einem Anschlußstutzen 6 versehen, der entsprechend eingelötet und für die Zufuhr von Hydraulikfluid in den Zylinderinnenraum dient. Zur Erzielung einer axial kurz bauenden Ausführung ist die Innenfläche des rohrförmigen Blechteils 2 mit einer Zwischenhülse 10 ausgestattet, die zwischen dem Flansch 3 und ihrer Stirnseite eine Ausnehmung 11 bildet, durch das Hydraulikfluid vom Anschlußstutzen 6 an der Stirnseite der Zwischenhülse 10 vorbei in den Zylinderinnenraum gelangen kann. Die für die Dichtung 8 maßgebenden Laufflächen sind die Zwischenhülse 10 und das rohrförmige Blechteil 1.

In erfindungsgemäßer Weise ist die Hülse 10 aus einem Kunststoff gefertigt, der an seiner Innenmantelfläche mit einer Aluminiumschicht bedampft ist, welche anschließend einer Oxidationsbehandlung unterworfen ist. Das Aufbringen der Aluminium-Schicht erfolgt in bekannter Weise nach dem CVD-Verfahren, d. h. durch Abscheiden von Aluminiumatomen aus der Gasphase, wobei der Schichtdickenbereich der abgeschiedenen Schichten eine große Streubreite einnehmen kann. im vorliegenden Fall wurden etwa 100 µm metallisches Aluminium abgeschieden. Das Oxidieren der aluminierten Bauteiloberfläche erfolgt nun in bekannter Weise nach dem Gleichstrom-Schwefelsäure-Verfahren (GS) unter folgenden Verfahrensbedingungen:

| Zusammensetzung: | |
|---|---|
| Schwefelsäure H₂SO₄ (1,84 g/cm³) | 280 g/l |
| Aluminiumsulfat Al₂ (SO₄)₃ x 18 H₂O | 25 g/l |

| Arbeitsbedingungen: | |
|---|---|
| Dichte bei 20 °C | 1,18 - 1,29 g/cm³ |
| Temperatur | 18 - 20 °C |
| Stromdichte | 1,5 A/dm² |
| Spannung | 10 - 15 V |
| Schaltung der Werkstücke | anodisch |
| Schichtwachstum | 1 µm in 2 - 3 min |
| Bewegung | mit Druckluft |
| Katode | Aluminiumkatode |
| Oberflächenverhältnis Anode : Katode | 1 : 1 |

Mit Hilfe dieses GS-Verfahrens wurde eine Aluminiumoxidschicht erzeugt, die eine Stärke von 60 µm aufwies. Durch diese auf der Innenseite der Hülse 10 aufgebrachte Al₂O₃-Schicht ist sichergestellt, daß über den gesamten axialen Verschiebeweg des Kolbens 7 eine gleichmäßig ausgebildete Al₂O₃-Schicht vorhanden ist, die sehr korrosionsfest und abriebsbeständig ist, so daß eine einwandfreie Dichtung realisiert ist.

### Bezugszahlenliste

- 1: rohrförmiges Blechteil
- 2: rohrförmiges Blechteil
- 3: Flansch
- 4: Flansch
- 5: Dichtung
- 6: Anschlußstutzen
- 7: Blechteil
- 8: Dichtung
- 9: Abstreifring
- 10: Zwischenhülse
- 11: Ausnehmung
- 12: Schweißverbindung
- 13: Lager

## Patentansprüche

1. Bauteil aus einem Kunststoff für den Hydraulikbereich, dessen Oberfläche eine Lauffläche für eine schleifende Dichtung darstellt, **dadurch gekennzeichnet, dass** die Oberfläche zumindest teilweise mit einer metallischen Schicht aus Aluminium oder einer Aluminiumlegierung versehen ist, wobei diese zur Erzeugung einer Oxidschicht einer chemischen oder elektrochemischen Behandlung unterworfen wird.

2. Bauteil nach Anspruch 1, **dadurch gekennzeichnet, dass** die Oxidschicht eine Stärke von 5 bis 100 µm aufweist.

3. Bauteil nach Anspruch 1, **dadurch gekennzeichnet, dass** die Oxidschicht gefärbt ist.

4. Bauteil nach Anspruch 1, **dadurch gekennzeichnet, dass** die Oxidschicht verdichtet ist.

## Claims

1. A component made of plastic for hydraulics applications whereby its surface represents a sliding surface for a sliding seal, **characterised in that** the surface, at least in part, is covered with a metallic coating of aluminium or an aluminium alloy, said coating having been subjected to a chemical or electro-chemical treatment for creating an oxide layer.

2. The component according to claim 1, **characterised in that** the oxide layer has a thickness of 5 to 100 µm.

3. The component according to claim 1, **characterised in that** the oxide layer is coloured.

4. The component according to claim 1, **characterised in that** the oxide layer is concentrated.

## Revendications

1. Composant formé d'une matière plastique utilisable dans le domaine hydraulique et dont la surface représente une surface de circulation pour une garniture d'étanchéité coulissante, **caractérisé en ce que** la surface est pourvue au moins en partie d'une couche métallique en aluminium ou en un alliage d'aluminium, cette couche étant soumise, pour la production d'une couche d'oxyde, à un traitement chimique ou électrochimique.

2. Composant selon la revendication 1, **caractérisé en ce que** la couche d'oxyde possède une épaisseur de 5 à 100 µm.

3. Composant selon la revendication 1, **caractérisé en ce que** la couche d'oxyde est colorée.

4. Composant selon la revendication 1, **caractérisé en ce que** la couche d'oxyde est comprimée.
